# EUROPÄISCHE PATENTSCHRIFT

(11) **EP 1 256 955 B1**
(45) Veröffentlichungstag und Bekanntmachung des Hinweises auf die Patenterteilung: **28.06.2006**
(21) Anmeldenummer: 02009451.2
(22) Anmeldetag: 25.04.2002
(51) Int. Cl.: G11B 33/12, G11B 33/08

(54) **Laufwerksbefestigung**
Fastening device for disk drive
Dispositif de fixation d'unité de disques

(30) Priorität: 07.05.2001 DE 10122067
(43) Veröffentlichungstag der Anmeldung: 13.11.2002
(73) Patentinhaber: Fujitsu Siemens Computers GmbH, 80807 München (DE)
(72) Erfinder: Neukam, Wilhelm, 86399 Bobingen (DE)
(74) Vertreter: Epping - Hermann - Fischer

(56) Entgegenhaltungen:
- EP-A- 0 738 102
- EP-A- 0 834 880
- EP-A- 0 843 313
- EP-A- 0 843 314
- US-A- 5 227 954
- US-A- 6 052 278
- US-B1- 6 209 842

## Beschreibung

Die Erfindung betrifft eine Laufwerksbefestigung in einem Computer oder dergleichen mit einem Blechkäfig, in den das Laufwerk über seitlich ansteckbare Kunststoffteile einschiebbar ist.

Eine derartige Laufwerksbefestigung ist zum Beispiel aus der EP 0 834 880 A1 bekannt.

Alternative Laufwerksbefestigungen werden zum Beispiel dadurch erzielt, daß von dem Blechkäfig nach Innen Blechlappen abgebogen werden und auf diesen dann die Laufwerke eingeschoben und anschließend seitlich verschraubt werden.

Ebenso ist es bekannt, zum Beispiel Führungsschienen seitlich an die Laufwerke anzuschrauben und die Laufwerke samt Führungsschienen in den Blechkäfig einzuschieben.

Die in einem Computer eingebauten Laufwerke müssen zu einem gewissen Maße mechanisch gedämpft sein. Hierzu werden Fallversuche durchgeführt und die Beschleunigungswerte in den Laufwerken gemessen.

Bei der Durchführung der Fallversuche wurde festgestellt, daß sich folgende Rahmenbedingungen auf die Beschleunigungswerte innerhalb der Laufwerke erheblich auswirken:
a) Reduzierung des Luftspaltes zwischen Laufwerk und Käfig reduziert die Beschleunigungswerte
b) die Materialpaarung Blech - Blech erhöht die Beschleunigungswerte
c) ein Materialmix Blech - Kunststoff reduziert die Beschleunigungswerte

Eine weitere Rahmenbedingung bei der Festlegung von Laufwerken sind die Maßtoleranzen der Laufwerke. Diese dürfen nach Spezifikationen zum Beispiel bei einem 5,25" CD-ROM-Laufwerk in der Breite bis zu +/- 0,5 mm und in der Höhe bis zu +/-0,3 mm betragen. Tatsächlich wurden an den Laufwerken jedoch auch schon größere Abweichungen festgestellt.

Der Erfindung liegt die Aufgabe zugrunde, eine mechanische gedämpfte Laufwerksbefestigung aufzuzeigen, mit welcher gleichzeitig auch der Toleranzausgleich bei den Laufwerken erzielt wird.

Erfindungsgemäß wird diese Aufgabe dadurch gelöst, daß die Kunststoffteile für die Laufwerksfestlegung zwei in Einschubrichtung nacheinander angeordnete federnde Elemente aufweisen, welche das Laufwerk spielfrei festlegen.

Durch die federnden Elemente wird somit zum einen der Toleranzausgleich erzielt und zum anderen das Laufwerk bei Stürzen mechanisch stark gedämpft.

Die federnden Elemente sind vorzugsweise so angeordnet, daß sie das Laufwerk sowohl horizontal als auch vertikal spielfrei festlegen.

Vorzugsweise sind die federnden Elemente bogenförmig ausgebildet und stehen in Richtung des aufzunehmenden Laufwerks aus dem Kunststoffteil ab.

Eine besonders bevorzugte Ausführungsform sieht vor, daß die Kunststoffteile u-förmig das Laufwerk seitlich umschließen und für die Laufwerksfestlegung nach oben bzw. nach unten sowie seitlich jeweils zwei in Einschubrichtung nacheinander angeordnete federnde Elemente angeordnet sind.

Durch die u-förmige Ausbildung der Kunststoffteile sowie durch die jeweilige Anordnung der federnden Elemente ist gewährleistet, daß in alle Richtungen eine mechanische Dämpfung des Laufwerks erfolgt und somit auch in keiner Richtung bei einem Fall die geforderten Beschleunigungswerte überschritten werden.

Die Kunststoffteile sind für beide Seiten vorzugsweise identisch und lediglich spiegelsymmetrisch an dem Laufwerk angeordnet. Ein Kunststoffteil kann für ein oder für mehrere Laufwerke ausgebildet sein.

Die Festlegung des Laufwerks kann von einer oder aber auch von zwei Seiten konventionell mit Schrauben erfolgen. Hierzu gibt es zwei Alternativen, wobei gemäß der ersten Alternative das Laufwerk mit den Kunststoffteilen verschraubt wird. Der Vorteil besteht hierin in einer kompletten schalttechnischen Entkopplung des Laufwerks vom Käfig. Der Massekontakt kann, wie bei der Anmeldung EP 0 834 880 A1, über eine Metallklammer erfolgen.

Gemäß einer zweiten Ausführungsform sind im Blechkäfig kleinere Löcher vorgesehen und das Laufwerk wird über längere Schrauben, die durch die Kunststoffteile hindurchgehen, mit dem Blechkäfig verschraubt. Bei dieser Art der Festlegung kann auf einen zusätzlichen Massekontakt verzichtet werden. Die Schraube bildet jedoch eine Brücke für den Körperschall.

Hingegen wird bei der ersten Variante der Festlegung durch den Materialmix Metall - Kunststoff die Ausbreitung des Körperschalles reduziert, so daß man insgesamt ein leiseres System erhält.

Nachfolgend wird anhand eines in den Figuren dargestellten Ausführungsbeispieles die Erfindung näher erläutert. In den Figuren zeigen:
- Figur 1: eine Explosionsdarstellung einer mechanisch gedämpften Laufwerksfestlegung und
- Figur 2: die Ausführungsform gemäß Figur 1 in montiertem Zustand.

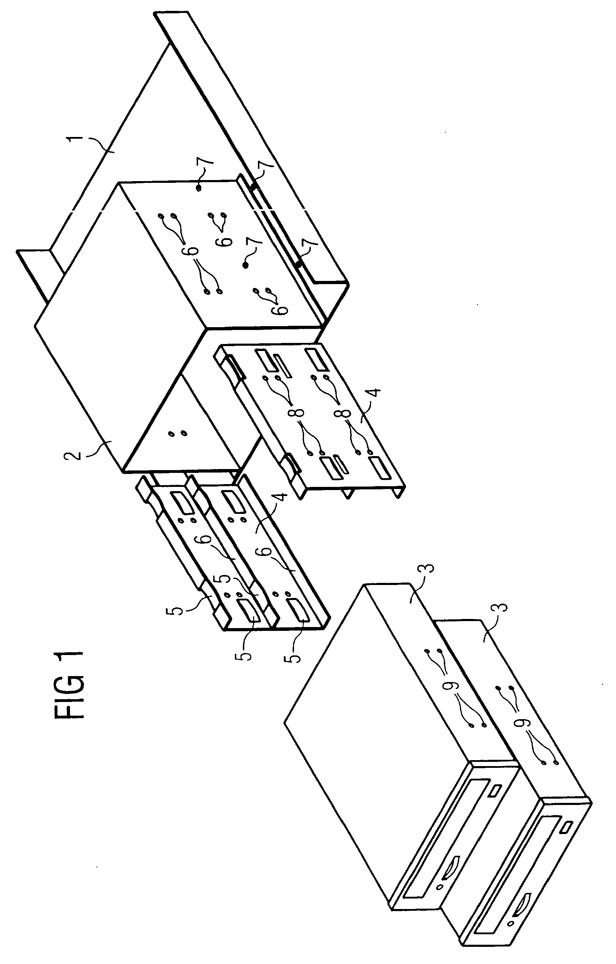

Figur 1 zeigt eine mechanisch gedämpfte Laufwerksbefestigung in einem Computer in Explosionsdarstellung.

Von dem Computer ist lediglich ein Teil des Gehäuses 1 dargestellt, auf welchem ein Blechkäfig 2 zur Aufnahme von Laufwerken 3 angeordnet ist. Im dargestellten Ausführungsbeispiel ist der Blechkäfig 2 für die Aufnahme von zwei Laufwerken 3 ausgebildet, kann jedoch auch nur für ein Laufwerk oder für mehrere Laufwerke ausgebildet sein.

Zur Erhöhung der mechanischen Dämpfung werden in den Blechkäfig 2 seitlich zwei Kunststoffteile 4 eingeschoben, in welche wiederum die Laufwerke 3 eingeschoben werden können.

Die Kunststoffteile 4 weisen an ihren Außenseiten nicht dargestellte Haken und Laschen auf, mit welchen sie an den Innenseiten des Blechkäfiges 2 eingehängt werden können.

Die Kunststoffteile 4 sind so ausgebildet, daß sie seitlich jedes Laufwerk u-förmig umschließen. Zur Erhöhung der Dämpfungseigenschaften der Kunststoffteile 4 sind in diesen federnde Elemente 5 vorgesehen, welche die Laufwerke sowohl horizontal als auch vertikal spielfrei zwischen den Kunststoffteilen 4 und somit auch im Blechkäfig 2 festlegen.

Pro Aufnahmeschacht ist an den Kunststoffteilen für jedes Laufwerk eine Auflage 6 ausgebildet, auf welcher das Laufwerk 3 in das Kunststoffteil 4 eingeschoben wird.

Die federnden Elemente 5 sind jeweils seitlich in den Kunststoffteilen 4 sowie auch in dem Abschnitt oberhalb des aufgenommenen Laufwerkes ausgebildet, so daß die federnden Elemente 5 das Laufwerk horizontal sowie vertikal spielfrei festlegen.

Im dargestellten Ausführungsbeispiel dient der mittlere Abschnitt sowohl als Auflage 6 wie auch für die Integration der federnden Elemente 5, die auf den unteren Aufnahmeschacht für das untere Laufwerk 3 wirken.

Von den federnden Elementen 5 sind an einem Kunststoffteil 4 pro Aufnahmeschacht in Einschubrichtung jeweils zwei seitlich und zwei für die federnde Beaufschlagung von oben nach unten hintereinander angeordnet, so daß eine eindeutige Festlegung und auch eine Dämpfung in allen Richtungen und bei einem Stoß beziehungsweise Sturz des Computers mit eingebauten Laufwerken 3 erfolgt.

Zusätzlich kann auch eine federnde Beaufschlagung durch federnde Elemente von unten nach oben erfolgen (nicht dargestellt).

Im dargestellten Ausführungsbeispiel sind in dem Blechkäfig 2 seitlich relativ große Löcher 6 vorgesehen, durch welche über Schrauben 7 die Kunststoffteile 4 mit den Laufwerken 3 verschraubt werden können. Hierzu sind in den Kunststoffteilen 4 entsprechende Bohrungen 8 vorgesehen, die mit den in den Laufwerken standardmäßig vorhandenen Gewindebohrungen 9 zusammenwirken.

Die Löcher 6 im Blechkäfig 2 sind so groß gewählt, daß die Köpfe der Schrauben 7 sich in diesen etwas bewegen können, so daß keine starre Verbindung zwischen den Laufwerken 3 und im Blechkäfig 2 besteht. Dies hat den Vorteil, daß das Laufwerk keine starre Verbindung zum Blechkäfig aufweist und auch schalltechnich komplett vom Blechkäfig 2 entkoppelt ist. Durch den Materialmix Blech-Kunststoff wird die Ausbreitung des Körperschalls reduziert, so daß man insgesamt ein leiseres System erhält.

Eine Masseverbindung zu den Laufwerken 3 kann z.B. über eine Metallfeder, welche auf die Kunststoffteile 4 gesteckt wird, erzielt werden.

Alternativ ist es auch möglich, über längere Schrauben durch die Kunststoffteile 4 hindurch die Laufwerke 3 mit dem Blechkäfig 2 zu verbinden, wobei hier jedoch jede Schraube eine Brücke für den Körperschall darstellt und das System schalttechnisch eine geringere Dämpfung wie die vorherige Variante aufweist.

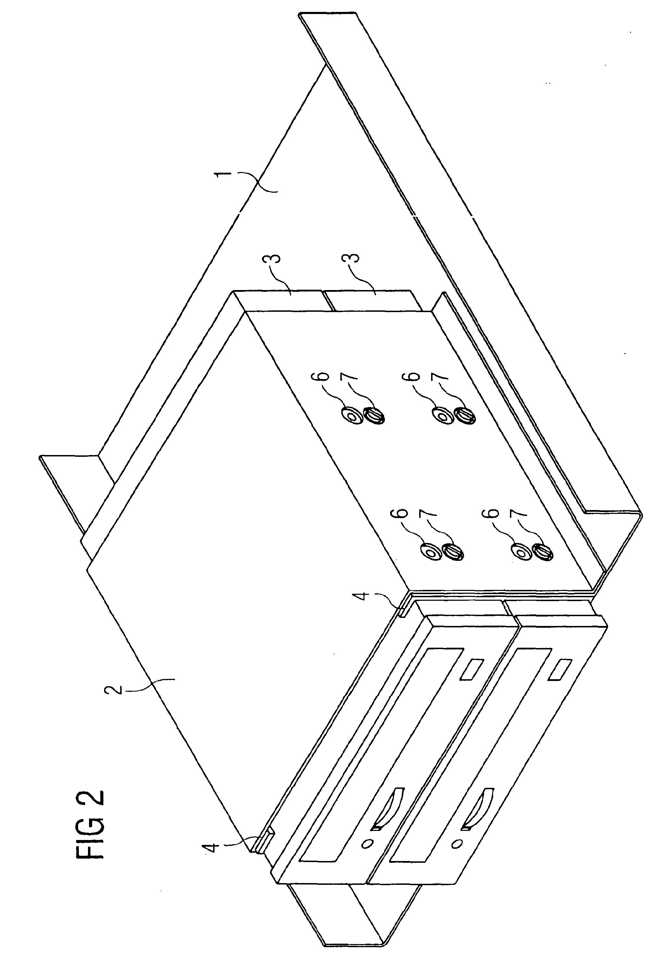

Figur 2 zeigt die Laufwerke 3 im eingebauten Zustand. Um eine gute mechanische Dämpfung zu erzielen, ist der Blechkäfig 2 über nahezu die komplette Laufwerkslänge ausgebildet und die Kunststoffteile 4 weisen nahezu exakt die Länge des Blechkäfiges 2 auf.

## Patentansprüche

1. Laufwerksbefestigung in einem Computer oder dergleichen mit einem Blechkäfig (2) im Computer, in dem ein Laufwerk (3) über seitlich ansteckbare Kunststoffteile (4) einschiebbar ist,
**dadurch gekennzeichnet, daß**
die Kunststoffteile (4) für die Laufwerksfestlegung zwei in Einschubrichtung nacheinander angeordnete federnde Elemente (5) aufweisen, welche das Laufwerk (3) spielfrei festlegen.

2. Laufwerksbefestigung nach Anspruch 1,
**dadurch gekennzeichnet, daß**
die federnde Elemente (5) das Laufwerk (3) sowohl horizontal als auch vertikal spielfrei festlegen.

3. Laufwerksbefestigung nach Anspruch 1 oder 2,
**dadurch gekennzeichnet, daß**
die federnden Elemente bogenförmig in Richtung des aufzunehmenden Laufwerkes aus dem Kunststoffteil (4) abstehen.

4. Laufwerksbefestigung nach einem der Ansprüche 1 bis 3,
**dadurch gekennzeichnet, daß**
die Kunststoffteile (4) u-förmig seitlich das Laufwerk (3) umschließen.

5. Laufwerksbefestigung nach einem der Ansprüche 1 bis 4,
**dadurch gekennzeichnet, daß**
die Kunststoffteile (4) für beide Seiten identisch sind.

6. Laufwerksbefestigung nach einem der Ansprüche 1 bis 5,
**dadurch gekennzeichnet, daß**
die Kunststoffteile für einen oder für mehrere Laufwerkseinbauplätze ausgebildet sind.

7. Laufwerksbefestigung nach einem der Ansprüche 1 bis 6,
**dadurch gekennzeichnet, daß**
das Laufwerk (3) durch Schrauben (7) am Kunststoffteil (4) festgelegt ist.

8. Laufwerksbefestigung nach einem der Ansprüche 1 bis 6,
**dadurch gekennzeichnet, daß**
das Laufwerk (3) durch Schrauben am Blechkäfig (2) festgelegt ist.

## Claims

1. Disk-drive fastening in a computer or the like having a sheet-metal cage (2) in the computer in which a disk drive (3) can be inserted via side-attachable plastic parts (4),
**characterized in that**
the plastic parts (4) for the disk-drive fastening have two elastic elements (5) arranged one after the other in the insertion direction that fix the disk drive (3) with no play.

2. Disk-drive fastening according to Claim 1,
**characterized in that**
the elastic elements (5) fix the disk drive (3) both horizontally and vertically with no play.

3. Disk-drive fastening according to Claim 1 or 2,
**characterized in that**
the elastic elements project out of the plastic part (4) in an arc shape towards the disk drive to be housed.

4. Disk-drive fastening according to one of Claims 1 to 3,
**characterized in that**
the plastic parts (4) enclose the sides of the disk drive (3) in a U-shape.

5. Disk-drive fastening according to one of Claims 1 to 4,
**characterized in that**
the plastic parts (4) are identical for both sides.

6. Disk-drive fastening according to one of Claims 1 to 5,
**characterized in that**
the plastic parts are designed for one or for a plurality of disk-drive installation slots.

7. Disk-drive fastening according to one of Claims 1 to 6,
**characterized in that**
the disk drive (3) is fixed to the plastic part (4) by screws (7).

8. Disk-drive fastening according to one of Claims 1 to 6,
**characterized in that**
the disk drive (3) is fixed to the sheet-metal cage (2) by screws.

## Revendications

1. Fixation pour unité de disque dans un ordinateur ou similaires, qui présente dans l'ordinateur une cage (2) en tôle dans laquelle une unité de disque (3) peut être insérée par l'intermédiaire de pièces (4) en matière synthétique qui peuvent être enfichées latéralement,
**caractérisée en ce que** les pièces (4) en matière synthétique destinées à fixer les unités de disque présentent deux éléments élastiques (5) disposés l'un derrière l'autre dans la direction d'insertion et qui immobilisent sans laisser de jeu l'unité de disque (3).

2. Fixation pour unité de disque selon la revendication 1, **caractérisée en ce que** les éléments élastiques (5) immobilisent sans laisser de jeu l'unité de disque (3) aussi bien dans le sens horizontal que dans le sens vertical.

3. Fixation pour unité de disque selon les revendications 1 ou 2, **caractérisée en ce que** les éléments élastiques débordent en forme d'arc de cercle de la pièce (4) en matière synthétique en direction de l'unité de disque à recevoir.

4. Fixation pour unité de disque selon l'une des revendications 1 à 3, **caractérisée en ce que** les pièces (4) en matière synthétique chevauchent latéralement en forme de U l'unité de disque (3).

5. Fixation pour unité de disque selon l'une des revendications 1 à 4, **caractérisée en ce que** les pièces (4) en matière synthétique sont identiques pour les deux côtés.

6. Fixation pour unité de disque selon l'une des revendications 1 à 5, **caractérisée en ce que** les pièces en matière synthétique sont prévues pour un ou plusieurs emplacements de montage d'unité de disque.

7. Fixation pour unité de disque selon l'une des revendications 1 à 6, **caractérisée en ce que** l'unité de disque (3) est immobilisée sur la pièce (4) en matière synthétique par des vis (7).

8. Fixation pour unité de disque selon l'une des revendications 1 à 6, **caractérisée en ce que** l'unité de disque (3) est immobilisée sur la cage (2) en tôle par vissage.
